# EUROPEAN PATENT APPLICATION

(11) **EP 4 653 827 A1**
(43) Date of publication of application: **26.11.2025**
(21) Application number: 25172991.9
(22) Date of filing: 28.04.2025
(51) Int. Cl.: G01G 19/393

(54) **ITEM MEASUREMENT AND DISCHARGE APPARATUS**

(30) Priority: 24.05.2024 JP 2024085000
(71) Applicant: Ishida Co., Ltd., Kyoto-shi Kyoto 606-8392 (JP)
(72) Inventor: KONISHI, Hiroe, Ritto-shi, 520-3026 (JP); YONETSU, Michihiko, Ritto-shi, 520-3026 (JP)
(74) Representative: Gill Jennings & Every LLP

(57) **Abstract**

There is a need to reduce wasteful time and energy for checking the proper functioning of a checking apparatus. A weighing apparatus 1 includes hoppers that retain items, load cells that measure the weights of the items, a control unit 80, and a communication unit 85 that receives signals from outside. The control unit 80 causes the items to be discharged from the hoppers when the weights of the items satisfy a proper weight discharge condition. When the communication unit 85 receives an improper weight item request signal relating to a check of the items discharged from the hoppers, the control unit causes the items whose weight is a weight deviating from the proper weight discharge condition to be discharged from the hoppers.

## Description

### BACKGROUND

### Technical Field

The present invention relates to an item measurement and discharge apparatus.

### Related Art

As disclosed in Patent Document 1 (JP-A No. 2021-89251), a weighing apparatus that measures items and discharges predetermined amounts of the items and a production line including the weighing apparatus are known. On the production line, the predetermined amounts of the items are discharged from the weighing apparatus, the items are packaged by a downstream packaging apparatus, and the packages are checked by a checking apparatus. Examples of apparatus that check whether the weights or the numbers of the items are proper amounts include weight checkers and X-ray inspection machines.

### SUMMARY

### Technical Problem

Conventionally, when an operator has wanted to confirm whether the checking apparatus is properly implementing the check, it has been necessary for the operator to feed to the checking apparatus not only items that will clear the check but also items that will be unable to clear the check (hereinafter called nonconforming items), and the operator has manually fed the nonconforming items to the front of the checking apparatus. For example, in order to check the proper functioning of a weight checker, once an hour the operator may feed a bag in which overweight items or underweight items are packaged to the front of the weight checker.

However, in order to check the proper functioning of the checking apparatus, the production line needs to be temporarily stopped and the operator must expend time and energy, and there is a need to reduce wasteful time and energy.

### Solution to Problem

An item measurement and discharge apparatus pertaining to a first aspect includes a retention unit that retains items, a measurement unit, a control unit, and a reception unit. The measurement unit measures weights or numbers of the items retained in the retention unit. The control unit causes the items to be discharged from the retention unit when the weights or the numbers measured by the measurement unit satisfy a predetermined discharge condition. The reception unit receives signals from outside. When the reception unit receives a signal relating to a check of the items discharged from the retention unit, the control unit causes the items whose weights or numbers become a weight or number deviating from the discharge condition to be discharged from the retention unit.

Here, the control unit basically causes the items to be discharged from the retention unit when the measured values (the weights or the numbers) of the items that have been measured satisfy the predetermined discharge condition. However, as an exception, when the reception unit receives the signal relating to a check of the items, the control unit causes the items to be discharged from the retention unit when the measured values deviate from the discharge condition. Because of this, when the reception unit receives the signal relating to a check of the items, the items having weights or numbers deviating from the predetermined discharge condition become discharged from the item measurement and discharge apparatus. That is, the weights or the numbers of the items discharged from the retention unit become a value deviating from the predetermined discharge condition. For this reason, when checking whether the weights or the numbers of the items are actually satisfying the discharge condition in a downstream checking apparatus on a production line for example, it becomes easy to determine whether the checking apparatus is working properly, and conventional waste can be reduced.

An item measurement and discharge apparatus pertaining to a second aspect is the item measurement and discharge apparatus pertaining to the first aspect, wherein the retention unit has first to N-th (N is a whole number equal to 2 or more) hoppers. The first to N-th hoppers retain the items. The measurement unit measures first to N-th weights or numbers that are weights or numbers of the items retained in the first to N-th hoppers. The control unit selects, based on the first to N-th weights or numbers, a combination of the hoppers with which the total of the weights or the numbers satisfies the discharge condition and causes the items to be discharged from the hoppers configuring the selected combination. Furthermore, when the reception unit receives the signal, the control unit selects a combination of the hoppers having weights or numbers whose total deviates from the discharge condition and causes the items to be discharged from the hoppers configuring the selected combination.

Here, by changing the combination of plural hoppers that is selected, the amount of the items discharged from one or a plurality of the hoppers configuring the selected combination can be changed to an amount that deviates from the discharge condition.

An item measurement and discharge apparatus pertaining to a third aspect is the item measurement and discharge apparatus pertaining to the second aspect, wherein the discharge condition includes an upper limit value and a lower limit value for the total of the weights or the numbers. The signal from outside is an exceed-upper-limit signal for requesting a discharge of the items with which the total of the weights or the numbers exceeds the upper limit value. When the reception unit receives the exceed-upper-limit signal, the control unit selects a predetermined combination of hoppers and causes the items to be discharged from the hoppers configuring the selected combination. The predetermined combination of hoppers is a combination of hoppers with which the total of the weights or the numbers exceeds the upper limit value and with which the total of the weights or the numbers falls within a predetermined numerical range in which defects will not occur in another item processing apparatus that performs processing on the items discharged from the retention unit.

Here, when the reception unit receives the exceed-upper-limit signal, the items with which the total of the weights or the numbers exceeds the upper limit value in the discharge condition become discharged from the retention unit. Consequently, although it is to be expected that the amount of the items discharged from the retention unit will become rather large, if the weight or the number is too large, there also arises the concern that it will exceed the processing capacity of the other item processing apparatus. In view of this, in the item measurement and discharge apparatus pertaining to the third aspect, the control unit selects a combination of the hoppers such that the total of the weights or the numbers falls within the predetermined numerical range in which defects will not occur in the other item processing apparatus that performs processing on the items discharged from the retention unit.

An item measurement and discharge apparatus pertaining to a fourth aspect is the item measurement and discharge apparatus pertaining to the third aspect, wherein the item processing apparatus is a packaging apparatus that packages the items discharged from the retention unit.

An item measurement and discharge apparatus pertaining to a fifth aspect is the item measurement and discharge apparatus pertaining to any of the first aspect to the fourth aspect, wherein the check of the items discharged from the retention unit is a check relating to the weights or the numbers of the items.

### BRIEF DESCRIPTION OF THE DRAWINGS

FIG. 1 is a schematic view showing an entire production system for producing bagged products;
FIG. 2 is a schematic block diagram showing the entire production system;
FIG. 3 is a schematic view showing a weighing apparatus;
FIG. 4 is a schematic perspective view showing main components of a packaging apparatus;
FIG. 5 is a schematic view of a weight checking apparatus;
FIG. 6 shows an example of checking results obtained by the weight checking apparatus;
FIG. 7 is a table of upper limit values and lower limit values for different discharge conditions; and
FIG. 8 is a flowchart of a weighing and discharge operation performed by the weighing apparatus.

### DETAILED DESCRIPTION

A production system 100 pertaining to an embodiment of the present invention will now be described below. (1) Overview

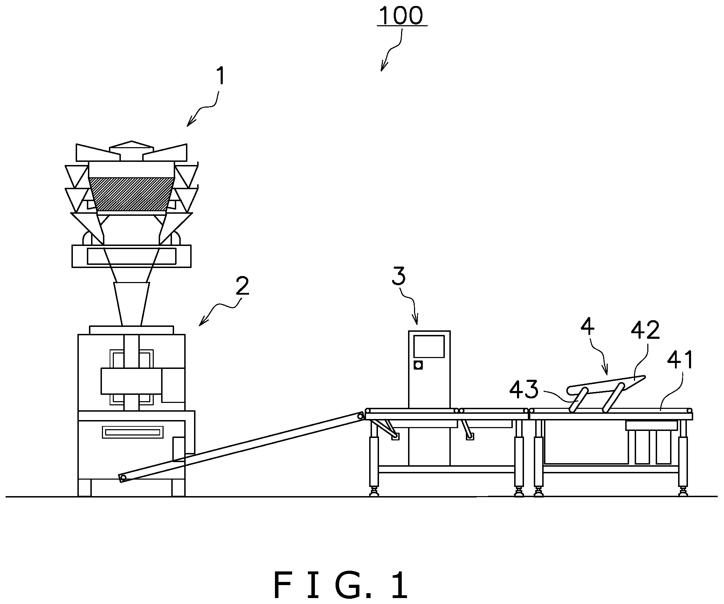

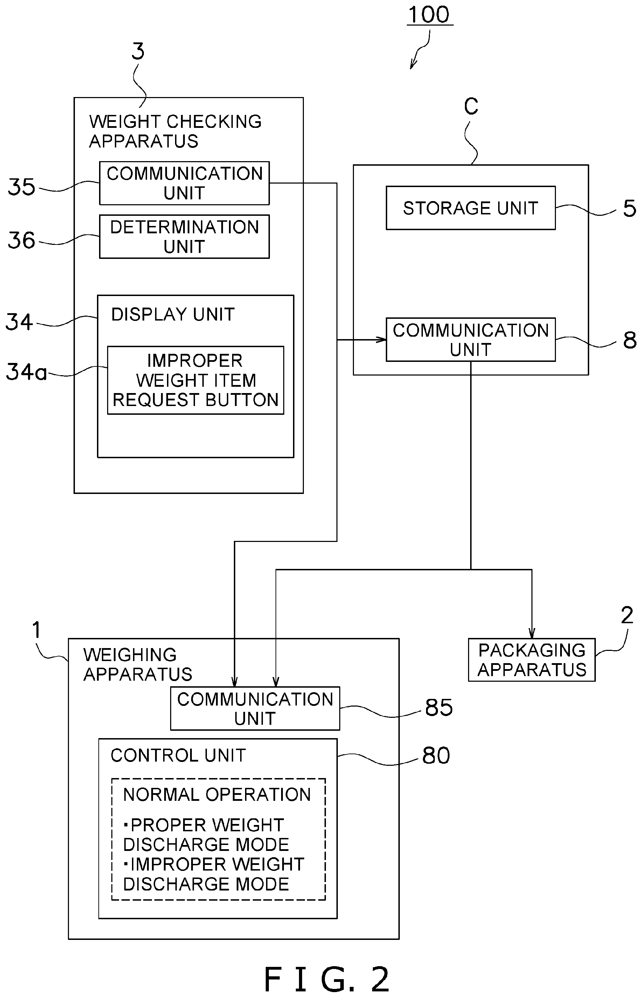

As shown in FIG. 1, the production system 100 is a system that weighs, packages, and checks items. The production system 100 includes a weighing apparatus 1, a packaging apparatus 2, a weight checking apparatus 3, and a seal checking apparatus 4 that are shown in FIG. 1 and a storage unit 5 that is shown in FIG. 2.

The weighing apparatus 1, the packaging apparatus 2, the weight checking apparatus 3, and the seal checking apparatus 4 shown in FIG. 1 configure a weighing, packaging, and checking system that weighs, packages, and checks the items. The items that are weighed in the weighing, packaging, and checking system are supplied to the weighing apparatus 1. The items supplied to the weighing apparatus 1 are divided into a predetermined weight at a time and thereafter are discharged as weighed items from the weighing apparatus 1 and fed to the packaging apparatus 2. In the packaging apparatus 2, the weighed items are packed in bags in units of the predetermined weight. The weighed items packed in the bags (hereinafter also called "packages") are placed on a belt conveyor and sequentially pass through the weight checking apparatus 3 and the seal checking apparatus 4. During the passage, the packages undergo checks regarding their weights and seals. The checking results obtained by the weight checking apparatus 3 and the seal checking apparatus 4 are sent to a downstream sorting mechanism (not shown in the drawings). The sorting mechanism sorts conforming items to a regular line conveyor (not shown in the drawings) and nonconforming items to a nonconforming item recovery conveyor (not shown in the drawings) based on the checking results. The sorting mechanism is a known mechanism such as the one described in Japanese Patent No. 6,721,241 (JP 6,721,241 B2).

The storage unit 5 shown in FIG. 2 configures a control apparatus C utilized by the production system 100. The storage unit 5 is included in the control apparatus C. The control apparatus C, a control unit 80 of the weighing apparatus 1, a control unit of the packaging apparatus 2, a control unit of the weight checking apparatus 3, and a control unit of the seal checking apparatus 4 are realized by computers. The control units each include a processing device and a storage device. For the processing device, a processor such as a central processing unit (CPU) or a graphics processing unit (GPU) can be used. The processing device reads programs stored in the storage device and performs predetermined processing in accordance with the programs. Moreover, the processing device can write processing results to the storage device and read information stored in the storage device in accordance with the programs.

### (2) Detailed Configuration

### (2-1) Weighing Apparatus

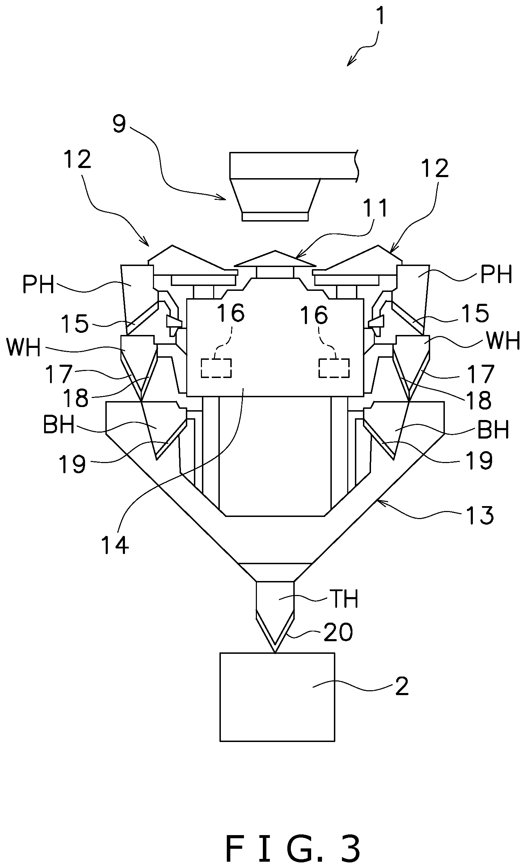

As shown in FIG. 3, the weighing apparatus 1 weighs, so as to achieve a target weigh value, the items supplied from a conveyance unit 9 and supplies the weighed items to the packaging apparatus 2. The items are items that vary in unit mass, such as agricultural products, marine products, or processed foods, for example.

The weighing apparatus 1 of the present embodiment is a combination weighing apparatus and includes hoppers that retain the items that are to be weighed. Specifically, the weighing apparatus 1 includes a dispersion table 11, supply feeders 12, pool hoppers PH, weigh hoppers WH, booster hoppers BH, a chute 13, and a timing hopper TH. Pluralities of the supply feeders 12, the pool hoppers PH, the weigh hoppers WH, and the booster hoppers BH are installed. Here, first to Nth (N=10) supply feeders 12, pool hoppers PH, weigh hoppers WH, and booster hoppers BH are equidistantly arranged around the dispersion table 11 as viewed from above.

The dispersion table 11 has a conical shape and is configured to be rotatable. The items that have fallen from the conveyance unit 9 onto the dispersion table 11 are moved in the radial direction while being dispersed in the circumferential direction on the dispersion table 11 by rotation and fall onto the supply feeders 12 arranged around the dispersion table 11.

The supply feeders 12 are vibrated by an electromagnetic vibrator (not shown in the drawings). The supply feeders 12 receive the items supplied from the dispersion table 11 and utilize vibration to cause the items they have received to move outward and fall to the downstream pool hoppers PH.

The pool hoppers PH receive, and temporarily retain, the items from the supply feeders 12. Each pool hopper PH is supported by a support member (not shown in the drawings) anchored to a body frame 14. Under each pool hopper PH is provided a gate 15 that opens and closes a discharge opening in the lower portion of that pool hopper PH. The timing of the opening and closing of each gate 15 is controlled by a controller (not shown in the drawings). When the gates 15 open, the items retained in the pool hoppers PH fall to the downstream weigh hoppers WH.

The weigh hoppers WH perform as a retention unit that retains the items. Furthermore, the weigh hoppers WH weigh the items. Specifically, the weigh hoppers WH are disposed directly under the gates 15 and receive, and temporarily retain, the items from the pool hoppers PH. Each weigh hopper WH is supported by a support member (not shown in the drawings) anchored to the body frame 14. The weights of the products in the weigh hoppers WH are measured by load cells 16. Under each weigh hopper WH are provided a first gate 17 and a second gate 18 that open and close discharge openings in the lower portion of that weigh hopper WH. The timing of the opening and closing of each gate 17, 18 is controlled by a controller (not shown in the drawings). When the first gates 17 open, the items retained in the weigh hoppers WH fall into the downstream chute 13. When the second gates 18 open, the items retained in the weigh hoppers WH fall into the downstream booster hoppers BH.

The load cells 16 perform as a measurement unit that measures the weights of the items retained in the weigh hoppers WH. Each load cell 16 weighs the products being retained in the weigh hopper WH corresponding to that load cell 16. It will be noted that each load cell 16 is disposed inside the weigh hopper WH corresponding to that load cell 16.

The booster hoppers BH perform as a retention unit that retains the items, and they hold the items. Specifically, the booster hoppers BH are disposed directly under the second gates 18 and receive from the weigh hoppers WH and temporarily retain the items that have been weighed. Each booster hopper BH is supported by a support member (not shown in the drawings) anchored to the body frame 14. Under each booster hopper BH is provided a gate 19 that opens and closes a discharge opening in the lower portion of that booster hopper BH. The timing of the opening and closing of each gate 19 is controlled by a controller (not shown in the drawings). When the gates 19 open, the items retained in the booster hoppers BH fall into the downstream chute 13.

The chute 13 is formed in a tubular shape having an inside surface in the shape of a truncated cone that tapers downward. The chute 13 is disposed such that its inside surface is positioned under all the weigh hoppers WH and all the booster hoppers BH. The inside surface of the chute 13 is a surface that receives, and guides to the packaging apparatus 2, the items discharged from the weigh hoppers WH or the booster hoppers BH.

The timing hopper TH is disposed under the chute 13. The timing hopper TH discharges the weighed items. Specifically, under the timing hopper TH is provided a gate 20 that opens and closes a discharge opening in the lower portion of the timing hopper TH. The timing of the opening and closing of the gate 20 is controlled by a controller (not shown in the drawings). In a state in which the gate 20 is closed, the timing hopper TH temporarily retains the weighed items discharged from the chute 13. When the gate 20 is opened, the timing hopper TH discharges to the packaging apparatus 2 the weighed items it temporarily retained.

It will be noted that the driving of the dispersion table 11, the vibration of the supply feeders 12, and the opening and closing of the gates 17, 18, 19, 20 are controlled by the control unit 80 of the weighing apparatus 1 shown in FIG. 2. The control unit 80 is connected via a communication unit 85 to a communication unit 8 of the control apparatus C, a communication unit 35 of the weight checking apparatus 3, and the packaging apparatus 2 of the production system 100 and performs a weighed item discharge operation based on signals from the other apparatus.

### (2-2) Packaging Apparatus

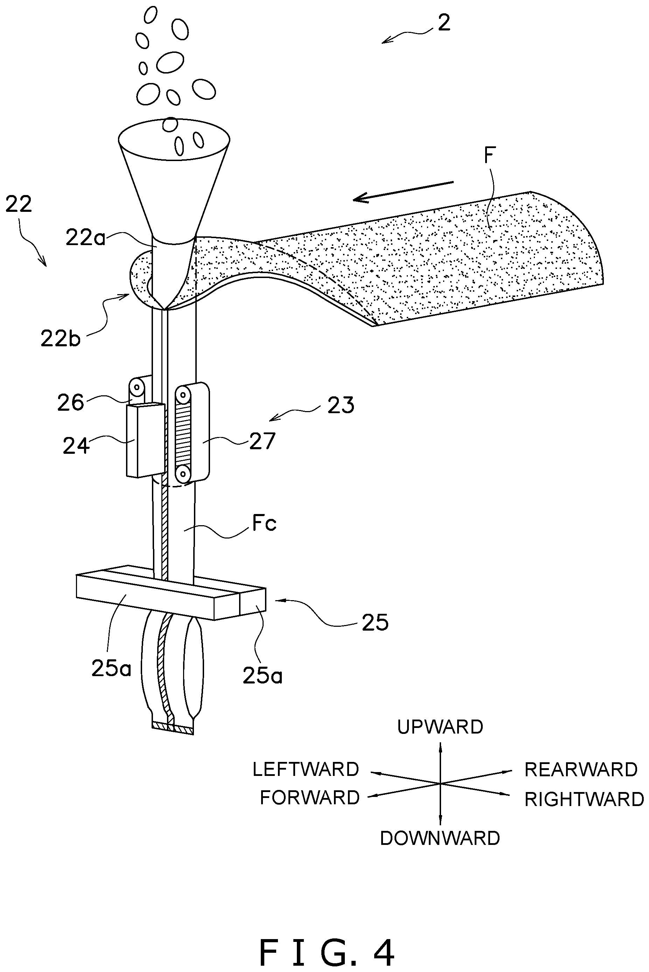

The packaging apparatus 2 packages the weighed items that have been weighed by the weighing apparatus 1. Specifically, the packaging apparatus 2 packs in bags the weighed items that are fed the predetermined weight at a time from the weighing apparatus 1. As shown in FIG. 4, the packaging apparatus 2 includes a film supply mechanism (not shown in the drawings), a forming mechanism 22, a conveyance mechanism 23, a longitudinal sealing mechanism 24, and a transverse sealing mechanism 25.

In the film supply mechanism is set a film roll into which a film F is wound. The forming mechanism 22 forms into a cylindrical shape the sheet-like film F that is fed from the film supply mechanism. The forming mechanism 22 has a tube (cylindrical portion) 22a and a former 22b.

The tube 22a is a cylindrical member whose upper and lower ends are open, and the tube 22a extends in the longitudinal direction. The tube 22a is anchored to the former 22b via a bracket (not shown in the drawings). The weighed items that fall the predetermined weight at a time from the weighing apparatus 1 are fed into the open portion in the upper end of the tube 22a. That is, the tube 22a is configured so that the weighed items pass through the inside of the tube 22a.

The former 22b is disposed surrounding the tube 22a near the upper portion of the tube 22a. The former 22b has a shape by which the sheet-like film F fed from the film supply mechanism becomes formed into a cylindrical shape when it passes through a gap between the former 22b and the tube 22a. That is, the sheet-like film F becomes wrapped around the outside surface of the tube 22a and formed into a cylindrical shape when it passes through the gap.

The conveyance mechanism 23 conveys downward the film F that has been formed into a cylindrical shape by the forming mechanism 22 (hereinafter this film F will be called "the cylindrical film Fc"). The conveyance mechanism 23 has a pair of pull-down belts 26, 27. The pull-down belts 26, 27 are disposed extending in the longitudinal direction symmetrical to each other on the right and left sides of the tube 22a extending in the longitudinal direction. The pull-down belts 26, 27 have the role of contacting the cylindrical film Fc wrapped around the tube 22a and conveying the cylindrical film Fc downward while sucking hold of it.

The longitudinal sealing mechanism 24 seals in the longitudinal direction the overlapping portion of the cylindrical film Fc. The longitudinal sealing mechanism 24 is disposed extending in the longitudinal direction along the tube 22a. The longitudinal sealing mechanism 24 heat-seals the overlapping portion extending in the longitudinal direction of the cylindrical film Fc wrapped around the tube 22a while pushing it with a fixed pressure against the side surface of the tube 22a. The longitudinal sealing mechanism 24 has a heater and a heater belt that is heated by the heater.

The transverse sealing mechanism 25 seals the bags by sealing in the transverse direction the portions of the cylindrical film Fc that become upper and lower ends of the bags. The transverse sealing mechanism 25 is disposed under the tube 22a. The transverse sealing mechanism 25 has a left and right pair of sealing jaws 25a.

The sealing jaws 25a have heaters inside. Sealing surfaces (surfaces that oppose each other during transverse sealing) of the sealing jaws 25a are heated by the heaters, and the cylindrical film Fc pinched by the sealing jaws 25a is heat-sealed in the transverse direction. The sealing jaws 25a are coupled to rotating shafts (not shown in the drawings) via arm members (not shown in the drawings) and revolve around the rotating shafts. The rotating shafts cause the sealing jaws 25a to revolve and perform an operation in which the sealing jaws 25a move horizontally toward and away from each other to pinch the cylindrical film Fc at an appropriate timing.

### (2-3) Weight Checking Apparatus

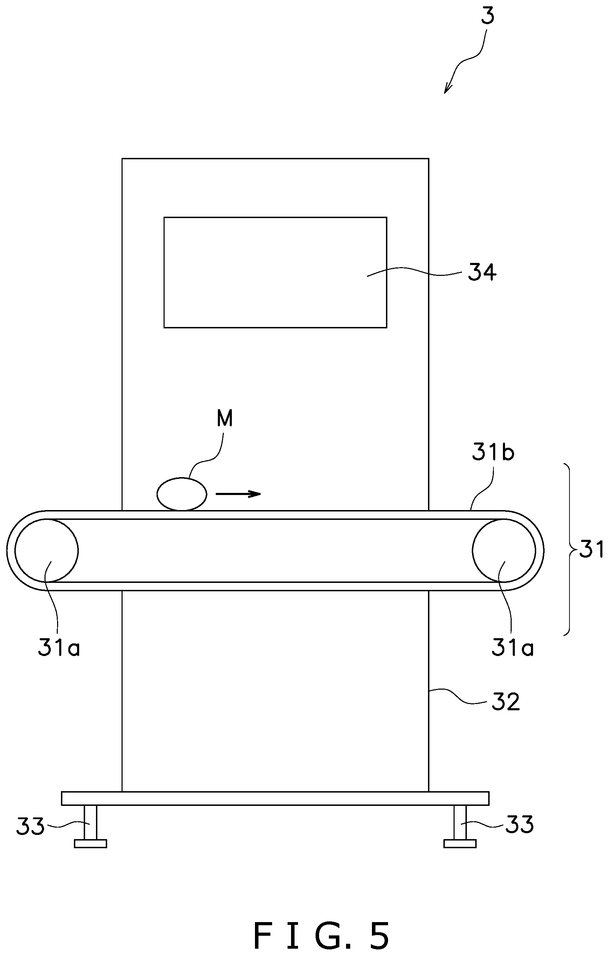

The weight checking apparatus 3 shown in FIG. 1 and FIG. 5 checks the weights of the weighed items discharged from the weighing apparatus 1. Here, the weight checking apparatus 3 checks the weights of the weighed items discharged from the packaging apparatus 2. The weight checking apparatus 3 selects only weighed items determined to be conforming items and conveys them to the seal checking apparatus 4 disposed downstream. The weight checking apparatus 3 includes a weigh conveyor 31, a load cell (not shown in the drawings), a housing 32, legs 33, and a display unit 34 that are shown in FIG. 5 and a communication unit 35 that is shown in FIG. 2.

The weigh conveyor 31 conveys weighed items M downstream. The weigh conveyor 31 has a motor (not shown in the drawings), rollers 31a, and a belt 31b.

The pair of rollers 31a are disposed, so as to be freely rotatable, on both ends in the horizontal direction. When one roller 31a is driven by the motor, the other roller 31a follows.

The belt 31b is entrained between the pair of rollers 31a. Here, the belt 31b is a flat belt. When the rollers 31a are driven by the motor, the belt 31b conveys forward in the horizontal direction (the direction of the arrow in FIG. 5) the weighed items M placed on the belt 31b.

It will be noted that the weight checking apparatus 3 may further include other conveyors disposed upstream and downstream of the weigh conveyor 31 in the conveyance direction.

The load cell measures the weights of the weighed items M by detecting a change in strain caused by the weights of the weighed items M conveyed by the weigh conveyor 31.

The housing 32 is supported by the pair of legs 33 and houses the weigh conveyor 31 and the load cell.

The display unit 34 is a touch panel display for input and output and displays the result of the weight checks of the weighed items M. The display unit 34 displays the results of the checks in such a way that they can be visually perceived. For example, the display unit 34 displays the values of the weights of the weighed items M and a predetermined weight serving as a norm. Furthermore, the display unit 34 displays "correct weight," "overweight," and "underweight" checking results described later. Moreover, the display unit 34 displays a later-described improper weight item request button 34a in response to an operation (see FIG. 2).

The communication unit 35 shown in FIG. 2 communicates with the control apparatus C. Here, the communication unit 35 sends the checking results obtained by the weight checking apparatus 3 to the storage unit 5 described later.

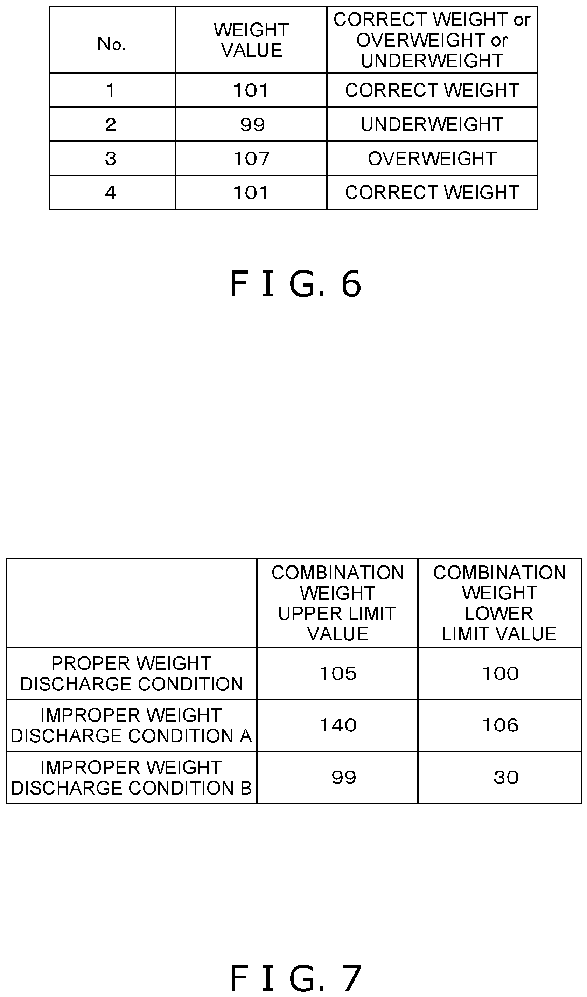

The weight checking apparatus 3 further includes a determination unit 36. The determination unit 36 determines, as the checking results, whether the weights are a "correct weight," "overweight," or "underweight" relative to the predetermined weight serving as a norm. The predetermined weight serving as the norm is set as desired. The predetermined weight may be a preset weight or may be based on the weights measured by the weighing apparatus 1. The determination unit 36 compares the weights of the weighed items M measured by the weight checking apparatus 3 with the predetermined weight. "Correct weight" is a weight within a predetermined weight range. "Overweight" is a weight that exceeds the predetermined weight range. "Underweight" is a weight that is below the predetermined weight range. For example, in the example shown in FIG. 6, a range of 100 to 105 is set as the predetermined weight serving as the norm, and the weight values checked by the weight checking apparatus 3 are determined to be the "correct weight" if they are in the range of 100 to 105, "overweight" if they exceed 105, and "underweight" if they are below 100.

### (2-4) Seal Checking Apparatus

As shown in FIG. 1, the seal checking apparatus 4 checks for seal defects in the bags that have been packed with the weighed items. Here, the seal checking apparatus 4 checks whether the packages in which the weighed items have been packaged by the packaging apparatus 2 are sealed.

The seal checking apparatus 4 includes a conveyance unit 41, a presser 42, a parallel motion mechanism 43, and an angle of rotation detector (not shown in the drawings). The conveyance unit 41 conveys the weighed items that have been packaged. The presser 42 presses the weighed items from above. The parallel motion mechanism 43 parallel moves the presser 42. The parallel motion mechanism 43 has links connected to the presser 42. The presser 42 is attached to the parallel motion mechanism 43 so as to be freely rotatable in a predetermined angular range. When the weighed items advance, the presser 42 rises diagonally upward and presses the bags of the weighed items with its own weight.

The angle of rotation detector is provided in the rotational center of the parallel motion mechanism 43 and is, for example, a rotary encoder. The angle of rotation detector detects the angle of rotation of the parallel motion mechanism 43. The control unit of the seal checking apparatus 4 judges that seals are defective when the detected angle of rotation is smaller than an angle of rotation serving as a norm.

### (2-5) Storage Unit

The storage unit 5 shown in FIG. 2 stores the checking results obtained by the weight checking apparatus 3. Specifically, the storage unit 5 stores the checking results of consecutive weighed items checked by the weight checking apparatus 3 together with the order in which the weighed items were checked. FIG. 6 shows an example of the checking results stored by the storage unit 5.

### (3) Operation of Weighing Apparatus

### (3-1) Weighing Operation of Weighing Apparatus

First, as shown in FIG. 3, appropriate amounts of the items are successively fed from the conveyance unit 9 onto the dispersion table 11 of the weighing apparatus 1. The items that have been fed onto the dispersion table 11 are moved on the dispersion table 11 by the rotation of the dispersion table 11 and fall onto the supply feeders 12 disposed in a circle around the dispersion table 11. The items that have fallen onto the supply feeders 12 are moved on the supply feeders 12 by the vibration of the supply feeders 12 and fall into the pool hoppers PH disposed in a circle around the supply feeders 12. At this time, the gates 15 are in a closed state, and the items are retained in the pool hoppers PH.

The gates 15 are controlled to open when there are no items being retained in the weigh hoppers WH disposed under those gates 15. Because of this, the items that had been retained in the pool hoppers PH are discharged into the weigh hoppers WH downstream of those pool hoppers PH. At this time, the gates 17, 18 are both in a closed state, and the items are retained in the weigh hoppers WH. The load cells 16 perform measurements at a timing when the items are being retained in the weigh hoppers WH corresponding to those load cells 16.

The second gates 18 are controlled to open when there are no items being retained in the booster hoppers BH disposed under those gates 18. Because of this, the items that had been retained in the weigh hoppers WH are discharged into the booster hoppers BH downstream of those weigh hoppers WH. At this time, the gates 19 are in a closed state, and the items are retained in the booster hoppers BH.

New items are fed from the upstream pool hoppers PH into the weigh hoppers WH that have become empty as a result of having discharged the items to the booster hoppers BH. The weights of the new items that have been fed to the weigh hoppers WH are also measured by the load cells 16.

### (3-2) Combination Operation and Item Discharge Operation of Weighing Apparatus

The items in the weigh hoppers WH and the items in the booster hoppers BH whose weights have been measured by the load cells 16 become subject to a combination operation that uses their weight values. The combination operation is executed by the control unit 80 of the weighing apparatus 1. "Combination operation" refers to combining and adding together the weight values of the items being retained in each of the weigh hoppers WH and each of the booster hoppers BH to find a combination of the items whose total weight value falls within a predetermined range.

When the control unit 80 executes the combination operation process, several hoppers WH, BH are selected from among the plural hoppers WH, BH. When the several hoppers WH, BH are selected by the combination operation process, the gates 17, 19 that open and close the discharge openings in the selected hoppers WH, BH are controlled to open, and the items that had been retained in those hoppers WH, BH are discharged to the chute 13. The hoppers WH, BH that have become empty as a result of having discharged the items to the chute 13 are successively replenished with new items from the upstream hoppers PH, WH.

The items that have accumulated while sliding down through the inside of the chute 13 are discharged to the timing hopper TH. At this time, the gate 20 is in a closed state, and the items are retained in the timing hopper TH. The gate 20 is controlled to open in accordance with the timing when the items are to be supplied to the packaging apparatus 2 disposed under the gate 20. Because of this, the items that had been retained in the timing hopper TH are conveyed to the packaging apparatus 2 downstream of the weighing apparatus 1.

### (3-3) Discharge Conditions in Combination Operation

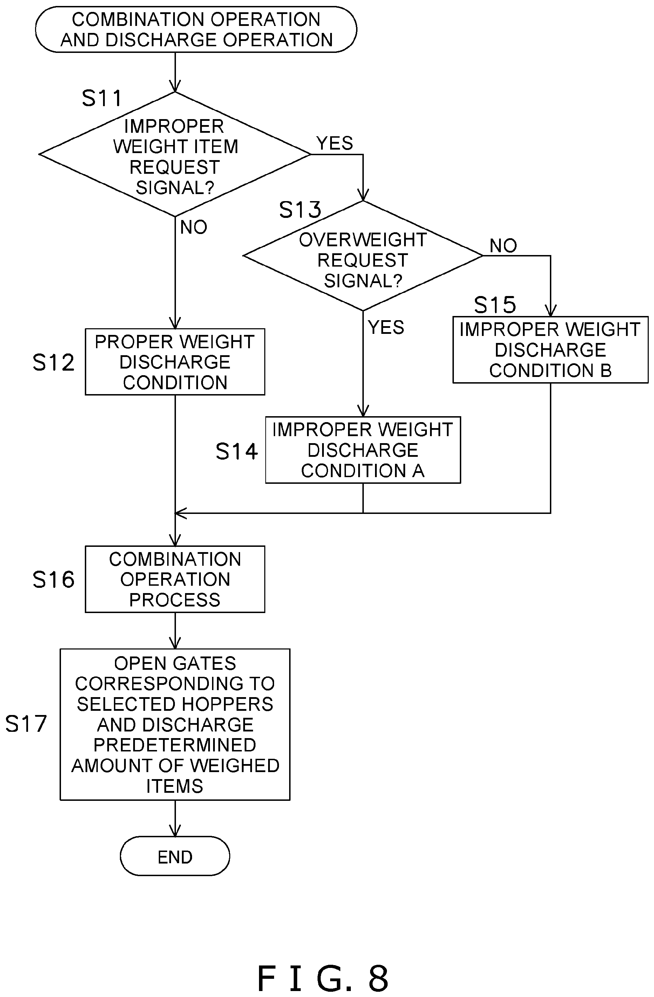

As mentioned above, in the combination operation, the control unit 80 of the weighing apparatus 1 finds a combination of the items whose total weight value falls within a predetermined range. The control unit 80 stores, as the predetermined range, that is, as discharge conditions, a proper weight discharge condition that is a basic discharge condition, an improper weight discharge condition A, and an improper weight discharge condition B (see the three conditions in FIG. 7 and FIG. 8).

### (3-3-1) Proper Weight Discharge Condition

When producing packages that will become products, the control unit 80 performs the combination operation such that the total weight value falls within the range of the basic proper weight discharge condition. As shown in FIG. 7, the proper weight discharge condition is a condition where the weight upper limit value in the combination operation is 105 grams and the weight lower limit value in the combination operation is 100 grams. When using the proper weight discharge condition, the control unit 80 performs the combination operation and selects hoppers such that the total weight value becomes 100 to 105 grams.

### (3-3-2) Improper Weight Discharge Condition A and Improper Weight Discharge Condition B

As mentioned above, the display unit 34 of the weight checking apparatus 3 displays the improper weight item request button 34a in response to an operation by an operator confirming whether the weight checking apparatus 3 is working normally in the production system 100. When the operator pushes the improper weight item request button 34a, an improper weight item request signal is sent from the communication unit 35 of the weight checking apparatus 3 to the weighing apparatus 1. The improper weight item request signal is a signal requesting the weighing apparatus 1 to discharge weighed items having an improper weight (improper weight items) rather than weighed items having a proper weight.

Here, two types of buttons are prepared as the improper weight item request button 34a. The first button is a button for requesting overweight weighed items that exceed the proper weight range, and when the operator pushes that button, the improper weight discharge condition A is used one time only in the weighing apparatus 1. The improper weight discharge condition A is, as shown in FIG. 7, a condition where the weight upper limit value in the combination operation is 140 grams and the weight lower limit value in the combination operation is 106 grams. When using the improper weight discharge condition A, the control unit 80 performs the combination operation and selects hoppers such the total weight value becomes 106 to 140 grams.

The second button is a button for requesting underweight weighed items that fall below the proper weight range, and when the operator pushes this button, the improper weight discharge condition B is used just one time in the weighing apparatus 1. The improper weight discharge condition B is, as shown in FIG. 7, a condition where the weight upper limit value in the combination operation is 99 grams and the weight lower limit value in the combination operation is 30 grams. When using the improper weight discharge condition B, the control unit 80 performs the combination operation and selects hoppers such that the total weight value becomes 30 to 99 grams.

It will be noted that the improper weight item request signal that is sent to the weighing apparatus 1 when the improper weight item request button 34a for requesting overweight items is pushed is an exceed-upper-limit signal for requesting a discharge of the weighed items having a total weight value that exceeds the weight range of the proper weight discharge condition. The weight range in the improper weight discharge condition A corresponding to this signal is set to a weight range in which packaging defects will not occur in the packaging apparatus 2 that packages the weighed items discharged from the weighing apparatus 1. Specifically, if the weighed items are overweight but 106 to 140 grams, there is no concern that a transverse sealing defect or a rupture in the bag will occur in the packaging apparatus 2, and packaging will be normally performed.

### (3-4) Flow of Combination Operation and Discharge Operation

When the control unit 80 of the weighing apparatus 1 receives from the downstream packaging apparatus 2 a signal requesting that the weighed items be discharged (a discharge request signal), it opens the gate 20 to cause the items that had been retained in the timing hopper TH to fall to the packaging apparatus 2. When the items are discharged from the timing hopper TH, the control unit 80 causes the items to be discharged from the several hoppers WH, BH selected by the combination operation process to feed the weighed items from the chute 13 to the timing hopper TH. The combination operation process and the weighed item discharge operation performed by the control unit 80 will now be described below with reference to FIG. 8.

Prior to the combination operation process, the control unit 80 uses steps S11 to S15 to decide which discharge condition to use. First, in step S11, the control unit 80 determines whether the communication unit 85 has received the improper weight item request signal from the weight checking apparatus 3. If the communication unit 85 has not received the improper weight item request signal, the control unit 80 moves to step S12, decides to use the proper weight discharge condition, and in step S16 executes the combination operation process. If the communication unit 85 has received the improper weight item request signal, the control unit 80 moves to step S13 and determines whether the improper weight item request signal is an overweight request signal or an underweight request signal. If the improper weight item request signal is an overweight request signal, the control unit 80 moves to step S14, decides to use the improper weight discharge condition A, and in step S16 executes the combination operation process. If the improper weight item request signal is an underweight request signal, the control unit 80 moves to step S15, decides to use the improper weight discharge condition B, and in step S16 executes the combination operation process.

As described above, the control unit 80 uses the proper weight discharge condition, or the improper weight discharge condition A or the improper weight discharge condition B that deviate from the proper weight discharge condition, and in step S16 executes the combination operation process. Then, the control unit 80 moves to step S17, opens the gates 17, 19 corresponding to the several hoppers WH, BH selected by the combination operation, and causes the weighed items whose total weight becomes a predetermined weight to be discharged from the hoppers WH, BH.

### (4) Operation of Packaging Apparatus

As shown in FIG. 4, the conveyance mechanism 23 is driven and the film F is paid out from the film roll of the film supply mechanism and guided to the forming mechanism 22. In the forming mechanism 22, the sheet-like film F paid out from the film roll advances along the surface of the former 22b and becomes wrapped around the outside surface of the cylindrical tube 22a and formed into the cylindrical film Fc when it passes through the gap between the former 22b and the tube 22a. Thereafter also, the cylindrical film Fc is conveyed downward in such a way that its inside surface is along the outside surface of the tube 22a. At this time, the longitudinal sealing mechanism 24 carries out heat sealing on the overlapping portion of the cylindrical film Fc that should be longitudinally sealed.

Next, the cylindrical film Fc comes off the tube 22a and descends to the transverse sealing mechanism 25. In the transverse sealing mechanism 25, heat sealing is carried out in the transverse direction on the portion of the cylindrical film Fc that becomes the lower end portion of the bag. At this time, a mass of the items falls from the weighing apparatus 1 through the inside of the tube 22a and amasses in the cylindrical film Fc. Then, in a state in which the items are filling the inside, heat sealing is carried out in the transverse direction on the portion of the cylindrical film Fc that becomes the upper end portion of the bag, and thereafter the heat-sealed portion is cut in the transverse direction by a cutter (not shown in the drawings) built into one of the sealing jaws 25a. Because of this, the preceding package and the trailing package are cut away from each other. The package that has been cut away falls onto the downstream belt conveyor.

### (5) Operation of Weight Checking Apparatus

The weighed items that have fallen onto the belt conveyor are conveyed to the weigh conveyor 31 of the weight checking apparatus 3 shown in FIG. 1 and FIG. 5. In the weight checking apparatus 3, the weights of the weighed items positioned on the weigh conveyor 31 are measured by the load cell. When the weights of the weighed items exceed or fall below the predetermined weight range, the weighed items are judged to be nonconforming and removed from the regular line conveyor by the sorting mechanism.

### (6) Operation of Seal Checking Apparatus

The weighed items whose weights have been measured by the weight checking apparatus 3 are conveyed by the conveyance unit 41 of the seal checking apparatus 4 shown in FIG. 1. In the seal checking apparatus 4, the presser 42 is rotated by the parallel motion mechanism 43 and thus presses from above the weighed items that have been packaged. At this time, the angle of rotation of the parallel motion mechanism 43 (the links) is detected by the angle of rotation detector. When the detected angle of rotation is equal to or greater than the angle of rotation serving as the norm, it is judged that the seals are good, and the weighed items are conveyed as products. When the detected angle of rotation is smaller than the angle of rotation serving as the norm, it is judged that the seals are defective, and the weighed items are removed from the production line.

### (7) Characteristics

(7-1)
In the weighing apparatus 1 of the present embodiment, the control unit 80 basically causes the items to be discharged from the hoppers WH, BH when the measured values (weights) of the items that has been measured satisfy the proper weight discharge condition. However, as an exception, when the communication unit 85 receives the signal relating to a check of the items (the improper weight item request signal) during normal operation of the weighing apparatus 1, the control unit 80 causes the items to be discharged from the hoppers WH, BH when the measured values deviate from the proper weight discharge condition. In other words, the combination operation process is executed such that the total weight fits the improper weight discharge condition A or the improper weight discharge condition B that deviate from the proper weight discharge condition, and the control unit 80 causes the weighed items whose total weight conforms to the overweight request signal or the underweight request signal to be discharged from the hoppers WH, BH.

Because of this, even in the weighing apparatus 1 that is normally operating, when the communication unit 85 receives the improper weight item request signal from the weight checking apparatus 3, the weighed items having a weight deviating from the proper weight discharge condition become discharged from the weighing apparatus 1. That is, the weight of the items discharged from the hoppers WH, BH becomes a weight deviating from the proper weight discharge condition. For this reason, it becomes easy to determine whether normal checks are being performed in the downstream weight checking apparatus 3 in the production system 100, it becomes no longer necessary to manually feed overweight items or underweight items to the weight checking apparatus 3 as has conventionally been the case, and wasteful work by the operator can be reduced.

It will be noted that, as described above, here the control unit 80 deliberately causes the weighing apparatus 1 to perform the weighed item discharge operation (the "improper weight discharge mode" in FIG. 2) under a condition deviating from the proper weight discharge condition in order to confirm the working of the weight checking apparatus 3 on the production line (the production system 100) when the weighing apparatus 1 is operating normally. Normal operation is an operation where the production line is running to produce, weigh, process, and check the items.

(7-2)
In the weighing apparatus 1 of the present embodiment, by changing the combination of plural hoppers WH, BH that is selected, the amount of the items discharged from one or a plurality of the hoppers WH, BH configuring the selected combination can be changed to an amount deviating from the proper weight discharge condition.

(7-3)
In the weighing apparatus 1 of the present embodiment, when the improper weight item request button 34a for requesting overweight weighed items is pushed in the weight checking apparatus 3, the improper weight item request signal is sent to the weighing apparatus 1. The improper weight item request signal is the exceed-upper-limit signal for requesting a discharge of the weighed items having a total weight value exceeding the weight range of the proper weight discharge condition. When the communication unit 85 of the weighing apparatus 1 receives the exceed-upper-limit signal, the items whose total weight exceeds the upper limit value in the proper weight discharge condition (here, 105 grams) become discharged from the hoppers WH, BH. Consequently, although it is to be expected that the amount of the items discharged from the hoppers WH, BH will be too large, if the weight is too large, there is the concern that it will exceed the processing capacity of the packaging apparatus 2. In view of this, in the weighing apparatus 1 of the present embodiment, the control unit 80 selects a combination of the hoppers WH, BH such that the total of the weights falls within a predetermined numerical range (106 to 140 grams) in which defects will not occur in the packaging apparatus 2 that performs processing on the weighed items discharged from the hoppers WH, BH.

### (8) Example Modifications

Example modifications of the above embodiment will now be described below. It will be noted that some or all of the content of each example modification may be combined with the content of the above embodiment or the content of another example modification to the extent that they are not mutually contradictory.

### (8-1) Example Modification A

In the above embodiment, the weighing apparatus 1 uses the weight values of the items in the hoppers WH, BH to perform the combination operation and causes the items whose total weight falls within the predetermined numerical range to be discharged from the hoppers WH, BH, but the present invention can also be applied to a weighing apparatus that measures the numbers, rather than the weight values, of the items in the hoppers WH, BH and causes the weighed items whose total number falls within a predetermined numerical range to be discharged from the hoppers WH, BH.

Regarding the measurement of the numbers of the items in the hoppers WH, BH, the weighing apparatus may perform a number conversion from the weights of the items in the hoppers WH, BH or may capture images of the items in the hoppers with a camera from above and use image analysis to find the numbers of the items. Furthermore, the weighing apparatus may find the numbers of the items by using sensors to detect the items fed to the hoppers WH, BH.

### (8-2) Example Modification B

In the above embodiment, the weighing apparatus 1, the packaging apparatus 2, the weight checking apparatus 3, the seal checking apparatus 4, and the sorting apparatus were described as examples of the apparatus configuring the production system 100, but a box packing apparatus that packs into boxes the packages that have finished being checked and other checking apparatus or the like may further be incorporated into the production line.

For example, instead of the weight checking apparatus 3, an X-ray inspection machine may count and/or weigh the items in the packages and inspect the packages.

Furthermore, the present invention may be applied to a weighing apparatus that does not perform a combination operation instead of the weighing apparatus 1 that is a combination weighing apparatus. For example, the present invention may be applied to a weighing apparatus that weighs powders or tablets.

### (8-3) Example Modification C

In the above embodiment, the display unit 34 of the weight checking apparatus 3 is provided with the improper weight item request button 34a, but the control apparatus C of the production system 100 may be provided with a touch panel or physical buttons, and the improper weight item request signal may be sent from there to the weighing apparatus 1.

Furthermore, instead of a configuration where the improper weight item request signal is sent to the weighing apparatus 1 when the operator pushes the improper weight item request button 34a, a configuration may also be employed where the weight checking apparatus 3 or the control apparatus C is provided with a schedule setting function and the improper weight item request signal is sent to the weighing apparatus 1 based on schedule settings.

### (8-4) Example Modification D

In the weighing apparatus 1 of the above embodiment, the control unit 80 executes the combination operation process using the proper weight discharge condition or the improper weight discharge condition A or the improper weight discharge condition B that deviate from the proper weight discharge condition. Instead of this, the control unit 80 may use just the proper weight discharge condition and the improper weight discharge condition A or just the proper weight discharge condition and the improper weight discharge condition B.

Furthermore, the control unit 80 may, without being provided with the improper weight discharge condition, perform the combination operation process so as to satisfy the proper weight discharge condition when it has not received the improper weight item request signal and perform the combination operation process so as to not satisfy the proper weight discharge condition when it receives the improper weight item request signal. Examples of the combination operation process performed so as to not satisfy the proper weight discharge condition include a process for confirming that the weight of the items in one random hopper that is not empty does not satisfy the proper weight discharge condition (is below the lower limit weight value) and selecting that one hopper and a process for confirming that the total value of the top three weights of the items in the hoppers does not satisfy the proper weight discharge condition (exceeds the upper limit weight value) and selecting those three hoppers.

### Reference Signs List

- 1: Weighing Apparatus (Item Measurement and Discharge Apparatus)
- 2: Packaging Apparatus
- 3: Weight Checking Apparatus
- 16: Load Cells (Measurement unit)
- 80: Control Unit
- 85: Communication Unit (Reception Unit)
- WH, BH: Hoppers (Retention unit)

### Citation List

### Patent Literature

Patent Document 1: JP-A No. 2021-89251

## Claims

1. An item measurement and discharge apparatus comprising:
a retention unit that retains items;
a measurement unit that measures weights or numbers of the items retained in the retention unit;
a control unit that causes the items to be discharged from the retention unit when the weights or the numbers measured by the measurement unit satisfy a predetermined discharge condition; and
a reception unit that receives signals from outside,
wherein when the reception unit receives a signal relating to a check of the items discharged from the retention unit, the control unit causes the items whose weights or numbers become a weight or number deviating from the discharge condition to be discharged from the retention unit.

2. The item measurement and discharge apparatus of claim 1, wherein
the retention unit has first to N-th (N is a whole number equal to 2 or more) hoppers that retain the items,
the measurement unit measures first to N-th weights or numbers that are weights or numbers of the items retained in the first to N-th hoppers,
the control unit selects, based on the first to N-th weights or numbers, a combination of the hoppers with which the total of the weights or the numbers satisfies the discharge condition and causes the items to be discharged from the hoppers configuring the selected combination, and
when the reception unit receives the signal, the control unit selects a combination of the hoppers having weights or numbers whose total deviates from the discharge condition and causes the items to be discharged from the hoppers configuring the selected combination.

3. The item measurement and discharge apparatus of claim 2, wherein
the discharge condition includes an upper limit value and a lower limit value for the total of the weights or the numbers,
the signal is an exceed-upper-limit signal for requesting a discharge of the items with which the total of the weights or the numbers exceeds the upper limit value, and
when the reception unit receives the exceed-upper-limit signal, the control unit selects a combination of the hoppers with which the total of the weights or the numbers exceeds the upper limit value and falls within a predetermined numerical range in which defects will not occur in another item processing apparatus that performs processing on the items discharged from the retention unit, and causes the items to be discharged from the hoppers configuring the selected combination.

4. The item measurement and discharge apparatus of claim 3, wherein the item processing apparatus is a packaging apparatus that packages the items discharged from the retention unit.

5. The item measurement and discharge apparatus of any of claims 1 to 4, wherein the check of the items discharged from the retention unit is a check relating to the weights or the numbers of the items.
